# EUROPEAN PATENT APPLICATION

(11) **EP 1 231 540 A2**
(43) Date of publication of application: **14.08.2002**
(21) Application number: 02100104.5
(22) Date of filing: 04.02.2002
(51) Int. Cl.: G06F 13/28

(54) **Direct memory access controller**

(30) Priority: 08.02.2001 GB 0103132
(71) Applicant: Zarlink Semiconductor Limited, Swindon, Wiltshire SN2 2QW (GB)
(72) Inventor: WATKINS, Andrew, PL6 7BQ, Plymouth (GB); WALKER, Anthony, Mark, PL6 6BB, Plymouth (GB); BUCKLEY, Matthew, Charles, PL19 8BN, Tavistock (GB); WORROLL, Maison, Lloyd, , Plymouth (GB); EVERED, Jonathon, PL2 1PS, Plymouth (GB); ALDRIDGE, David, , Tavistock (GB); FISHER, Daniel, PL3 5NU, Plymouth (GB)
(74) Representative: Lind, Robert

(57) **Abstract**

A Direct Memory Access (DMA) controller 5 for transferring data from a first to a second location under the control of a processor 7, the DMA controller 5 comprising at least three ports, each port being configurable to act as an input or output port of the DMA controller 5 and to be coupled to any one of the other ports.

## Description

The present invention relates to a direct memory access controller for transferring data from one memory location to another.

Conventional computer systems have been based around the combination of a processor (typically a microprocessor) and internal or external memory. In order to reduce the load on the microprocessor, so called direct memory access (DMA) controllers have been introduced. These are typically integrated onto the same chip as the processor.

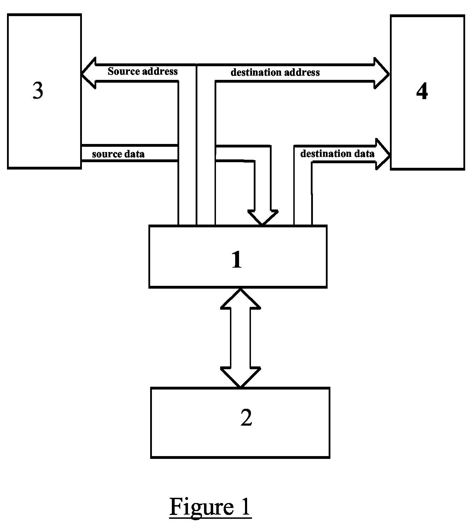

DMA controllers comprise hard wired logic for performing memory access operations. A computer system architecture comprising a DMA controller 1 is illustrated in Figure 1. Typically, in order to perform an access operation for a block of data, a microprocessor 2 stores in respective registers: the start (or source ) address of the memory block from which the data is to be transferred; the start (or destination ) address of the block of memory to which the data is to be transferred; and the size of the data block to be transferred. Typically, one of the source and destination locations is on a memory 3 located on the same chip as the processor and DMA controller, with the other of the source and destination locations being on an external memory 4. However, one or both of the locations may be a processor register or an external memory mapped device.

Each DMA transfer requires two bus transactions the first to read the data from the source and the second to write the data to the destination. An explicit address is generated for each transaction by an address generator coupled to the source or destination address registers. The data is buffered internally by the DMA controller between read and write operations. Once the correct number of words have been transferred, the DMA controller is re triggered or re programmed as required.

An inherent problem with this type of DMA controller is that when the controller is handling a transfer between two modules, the DMA controller acquires complete control of the system bus(es). This prevents, or at the very least restricts, access to the system bus(es) by other modules.

It is an object of the present invention to overcome or at least mitigate the disadvantage of DMA controllers noted in the previous paragraph. This and other objects are achieved by providing a DMA controller having three or more ports.

According to a first aspect of the present invention there is provided a Direct Memory Access (DMA) controller for transferring data from a first to a second location under the control of a processor, the DMA controller comprising at least three ports, each port being configurable to act as an input or output port of the DMA controller and to be coupled to any one of the other ports.

Typically, the configuration of said at least three ports is carried out under the control of a microprocessor coupled to the DMA controller, to allow each port to be coupled directly to any one of the other ports.

In use, the ports of the DMA controller may be coupled to a processor, processor memory, one or more system buses, and one or more dedicated modules. In a preferred embodiment of the present invention, the DMA controller comprises four ports, a first of the ports being coupled to a system bus, second and third ports each being coupled to the processor and processor associated memory via dedicated interfaces, and a fourth port coupled to at least one dedicated module via a dedicated interface. This allows two or more data transfer operations to be carried out in parallel.

The term system bus as used here means a bus which may be used to couple (data and address) signals between a plurality of modules, for example such as are mounted on a printed circuit board. One module may be a chip containing the processor, processor associated memory, and DMA controller. Others may be memory chips, disk drive controllers, etc. Alternatively, the system bus may be integrated wholly or partly onto the same chip as the DMA controller. Modules connected to the system bus may be located on or off chip.

Embodiments of the present invention provide a DMA controller which can perform a data transfer between two locations without necessarily occupying a system bus. Thus, other modules connected to the system bus may use the system bus at the same time as the data transfer is being carried out. This may occur for example when data is being transferred from processor associated memory to a dedicated module or *vice versa*. However, as at least one of the ports of the DMA controller is connected to a system bus, the DMA controller can access that bus when required.

Due to the multiple ports of the DMA controller of the present invention, the controller can be used to perform two or more data transfer operations in parallel. To achieve this, the DMA controller may comprise a source configuration register, a destination configuration register, and a transfer size configuration register for each transfer which it is capable of carrying out in parallel. The controller may further comprise source and destination address generators for each transfer. Thus, for a four port DMA controller, the controller may comprise two of each of these registers and two of each address generator. More preferably, the controller comprises a state machine controller for controlling the connection of ports in response to instructions received from the processor.

According to a second aspect of the present invention there is provided a computer system comprising:
a processor;
memory associated with the processor;
a Direct Memory Access (DMA) controller for transferring data from a first to a second location under the control of the processor, the DMA controller comprising at least three ports, each port being configurable to act as an input or output port of the DMA controller and to be coupled to any one of the other ports; and
a system bus to which modules may be connected,
wherein said processor is coupled to at least a first of the DMA controller ports, the system bus is coupled to a second of the DMA controller ports, and one or more modules are coupled to a third of the DMA controller ports.

Preferably, the processor and processor memory are coupled to the first and a fourth of the DMA controller ports.

Preferably, modules are coupled to the third port of the DMA controller via a dedicated bus, i.e. a bus used purely to transfer data between the DMA and a dedicated module.

Preferably, the processor, processor associated memory, and the DMA controller are integrated onto a single chip which may be mounted onto a printed circuit board comprising the system bus and said discrete modules. More preferably, the computer system comprises one or more memory modules coupled to the system bus.

According to a third aspect of the present invention there is provided a method of transferring data between two locations of a computer system, the method comprising configuring the ports of a Direct Memory Access (DMA) controller having at least three input/output ports to couple a first of the ports to one of said locations, a second of the ports to the other of said locations, and to couple the first and second ports together.

According to a fourth aspect of the present invention there is provided a method of transferring data between first and second, and third and fourth locations of a computer system, the method comprising configuring the ports of a Direct Memory Access (DMA) controller having at least four input/output ports to:
couple a first of the ports to said first locations, a second of the ports to said second locations, and to couple the first and second ports together; and
couple a third of the ports to said third locations, a fourth of the ports to said fourth locations, and to couple the third and fourth ports together.

For a better understanding of the present invention and in order to show how the same may be carried into effect reference will now be made by way of example to the accompanying drawings in which:
Figure 1 illustrates schematically a conventional computer system architecture comprising a DMA controller;
Figure 2 illustrates schematically a computer system architecture comprising a multi port DMA controller;
Figure 3 illustrates in more detail the DMA controller of the system of Figure 2 according to a first embodiment of the invention; and
Figure 4 illustrates in detail a DMA controller of the system of Figure 2 according to a second embodiment of the invention.

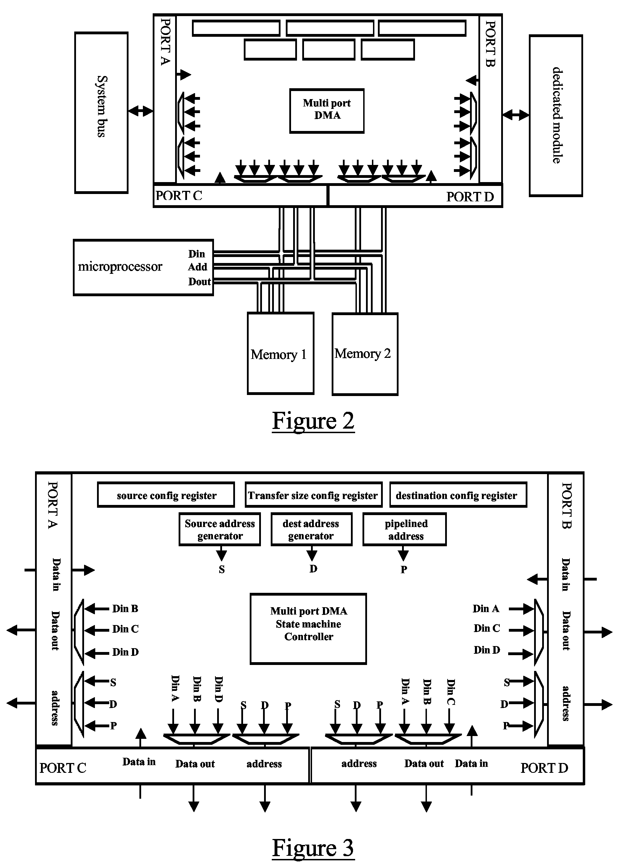

A conventional computer system architecture comprising a DMA controller has been described with reference to Figure 1. Figure 2 illustrates a new architecture at the heart of which is a DMA controller 5 having four ports A to D. The controller is dynamically programmable to couple any one of the ports to any other port. As each port can act as an input or an output port, the DMA controller 5 offers 16 connectivity options, i.e. A to B, B to A, A to C, C to A, etc.

Figure 3 illustrates the DMA controller 5 in more detail. Each port comprises a set of data input/output connections and a set of address connections. The controller further comprises a state machine 6 which can be programmed with the required connectivity, and acts to establish this connectivity. As with a conventional DMA controller, the DMA controller 5 comprises a source configuration register for holding the source address of a data transfer operation, a destination configuration register for holding the destination address of a data transfer operation, and a transfer size configuration register for holding the block size of a data transfer operation. The controller 5 also includes pipelined address generator (the operation of which is described below).

With reference again to Figure 2, the DMA controller is integrated onto the same chip as a processor 7 and processor associated memories 8,9. Ports C and D of the DMA controller 5 are coupled via buses to the processor 7 and memories 8,9. The processor chip is mounted on a printed circuit board (PCB) 10, with port A of the DMA controller 5 being coupled to a system bus 11, and port B being coupled to a dedicated module. The system bus is used to interconnect various devices/modules mounted on the PCB 10 including memory chips. The dedicated module connected to port D may be for example a memory mapped device or another device such as a UART or IP block or module.

In use, the processor 7 issues a data transfer instruction to the DMA controller 5 via one of the ports C, D. The processor 7 writes the source address and destination address for the transfer to the source and destination configuration registers of the DMA controller 5. The identities of the ports over which the source and destination locations are to be accessed are also written into the respective registers. The source and destination configuration registers have the following structure:

| *Source Address Register* | | | | | | | | |
|---|---|---|---|---|---|---|---|---|
| 31:10 | 9 | 8 | 7 | 6 | 5 | 4:2 | 1 | 0 |
| Source address | A | B | C | D | + / | Buffer size | rollover | unused |

| *Destination Address Register* | | | | | | | | |
|---|---|---|---|---|---|---|---|---|
| 31:10 | 9 | 8 | 7 | 6 | 5 | 4:2 | 1 | 0 |
| Destination address | A | B | C | D | + / | Buffer size | rollover | unused |

where a flag is set in the appropriate bit 6 to 9 to identify the port to be used to access the source/destination address, bit 5 indicates whether the block is to be accessed incrementally above or decrementally below the source address, and the buffer size and rollover fields are used to allow the DMA controller 5, in the case of circular buffers, to compute the rollover address of the buffer.

The processor writes into the transfer size configuration register, the size of the data block to be transferred. This register has the following structure:

| *Transfer Size Register* | | | |
|---|---|---|---|
| 31:10 | 9 | 8 | 7:0 |
| Transfer size | Pipe | Gol | Un used |

The processor also sets the flag at bit 8 to 1 in order to initiate the transfer process.

Bit 9 is used to turn on or off a pipelined processing feature. When reading from an external memory that is off chip, there is a three cycle latency between the read request and actually receipt of the data. Since the memories that the data is being transferred to can respond instantly, a form of pipeline is needed to account for this latency. Also in some cases the memory/module that the data is being transferred to has the ability to refuse a write request that has been made, for example maybe the processor is currently accessing that memory, or a higher priority task is being performed inside the module. This means that the data (from the external memory) that has been requested up until this point has to be remembered until the memory/module starts accepting data again. In addition the system bus could refuse the DMA access at any time for higher priority tasks. Therefore a FIFO is implemented inside the DMA controller 5 to act as an elastic buffer so that if the system bus is busy or the destination memory/module is busy, data currently in transit will not be lost. This also has the result of using available bandwidth slightly more effectively, because data that has been read from the system bus can be transferred to the memory/module even if the system bus is currently busy. Likewise, if the system bus is currently available, read requests can still be made even though the memory/module is busy.

Upon initiation of the transfer, the source and destination addresses are loaded into source and destination address generators of the DMA controller 5. The identities of the input and output ports are passed to the state machine which dynamically configures the ports accordingly. The transfer is started, with the address generators incrementing (or decrementing) the source and destination addresses until the transfer size is reached (or, where a circular buffer is being accessed, until a rollover condition is reached by one of the generators whereupon that address generator is reset to the base address of the buffer and the process continues).

The DMA controller 5 is, in addition to handling the transfer of data blocks between two ports, able to facilitate access by the processor to single words present at address spaces mapped to unused ports. This allows the processor to for example monitor peripheral blocks and do maintenance tasks whilst the DMA is performing a transfer using other ports not required by the processor.

The architecture of this DMA controller allows, for example, the following actions to be taken:
1. DMA transfer from port A to port C, allowing the processor to process data in the memory connected to Port D;
2. DMA transfer from port A to port D, allowing the processor to process data in the memory connected to Port C;
3. DMA transfer from port D to B, allowing the processor to process data in the memory connected to Port C, or to allow the processor to perform single word accesses to the backbone bus, through Port A;
4. DMA transfer from port C to A;
5. DMA transfer from A to B, allowing the microprocessor to process data contained in the memories connected to either Port C or D.

From the above list of actions it can be seen that in certain scenarios multiprocessing occurs, i.e. whilst performing a DMA transfer, the processor is still able to carry out operations through the unused ports.

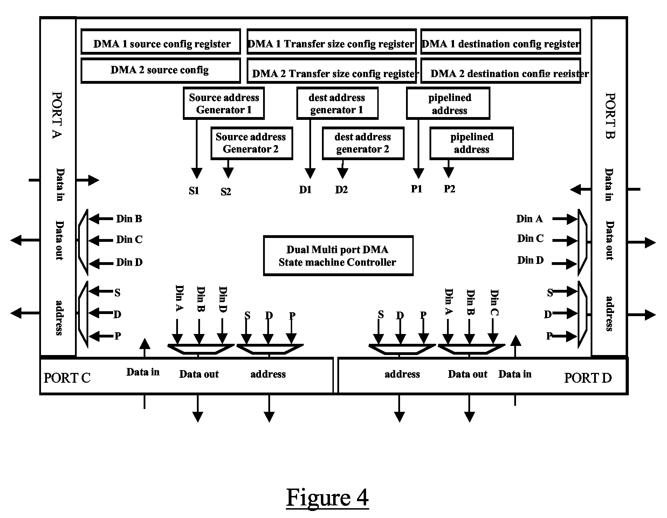

Figure 4 illustrates a DMA controller according to a second embodiment of the invention. This controller again comprises four ports A to D but, unlike the controller of Figure 3, comprises 2 of each register type (source configuration, destination configuration, and transfer size configuration), as well as two source address generators, two destination address generators, and two pipelined address generators. The registers and generators are grouped into two sets (DMA1 and DMA2) for handling two data transfer operations in parallel. The state machine is capable of setting up two port to port connections simultaneously, following the setting of the configuration registers by the processor. This architecture provides for the following high level configuration possibilities:
1. A single DMA transfer is initiated, whilst allowing the processor to continue working with modules / memories on the unused ports;
2. A DMA transfer is initiated, and then a second DMA transfer is initiated between the unused ports, both transferring data at the same time;
3. A DMA transfer is initiated, and then a second DMA transfer wants to use one or both of the same ports as the first transfer and is consequently automatically queued, to seamlessly commence the second DMA transfer once the first DMA transfer is complete and the relevant port/ports become free to use.

Particular example of these configuration possibilities are:
1. DMA transfer from port A to port C, allowing the processor to process data in the memory connected to Port D, and then to setup a second DMA transfer from port D to B or B to D, whilst the first transfer is still running;
2. DMA transfer from port A to port D, allowing the processor to process data in the memory connected to Port C, and then to setup a second DMA transfer from port C to B or B to C, whilst the first transfer is still running;
3. DMA transfer from port D to B, allowing the processor to process data in the memory connected to Port C, and then to setup a second DMA transfer from port C to A or A to C, whilst the first transfer is still running. Another option whilst the first transfer is running is that the Dual multi port DMA allows the processor access to the second system bus via port A;
4. DMA transfer from port C to A, whilst setting up a second DMA transfer from port B to D, or D to B;
5. DMA transfer from A to B, allowing the processor to process data contained in the memories connected to either Port C or D, and then to setup a second DMA transfer from port C to D or D to C, whilst the first transfer is still running.

It will be appreciated by the person of skill in the art that various modifications may be made to the above described embodiments without departing from the scope of the present invention.

## Claims

1. A Direct Memory Access (DMA) controller for transferring data from a first to a second location under the control of a processor, the DMA controller comprising at least three ports, each port being configurable to act as an input or output port of the DMA controller and to be coupled to any one of the other ports.

2. A controller according to claim 1 and comprising four ports, a first of the ports being arranged in use to be coupled to a system bus, second and third ports being arranged to be coupled to the processor and processor associated memory via dedicated interfaces, and a fourth port being arranged to be coupled to at least one dedicated module via a dedicated interface.

3. A controller according to claim 1 or 2 arranged to handle a plurality of data transfer operations in parallel and comprising a source configuration register, a destination configuration register, and a transfer size configuration register for each transfer which it is capable of carrying out in parallel.

4. A controller according to claim 3 and comprising source and destination address generators for each transfer.

5. A controller according to any one of the preceding claims and comprising a state machine for configuring the interconnection of ports.

6. A computer system comprising:
a processor;
memory associated with the processor;
a Direct Memory Access (DMA) controller for transferring data from a first to a second location under the control of the processor, the DMA controller comprising at least three ports, each port being configurable to act as an input or output port of the DMA controller and to be coupled to any one of the other ports; and
a system bus to which discrete modules may be connected;
wherein said processor is coupled to at least a first of the DMA controller ports, the system bus is coupled to a second of the DMA controller ports, and one or more discrete modules are coupled to a third of the DMA controller ports.

7. A computer system according to claim 6, wherein the processor and processor memory are coupled to the first and a fourth of the DMA controller ports.

8. A computer system according to claim 6 or 7, wherein said discrete modules are coupled to the third port of the DMA controller via a dedicated bus.

9. A computer system according to any one of claims 6 to 8, wherein the processor, processor associated memory, DMA controller, and system bus are integrated onto a single chip which may be mounted onto a printed circuit board comprising the system bus and said discrete modules.

10. A computer system according to claim 9 and comprising one or more memory modules coupled to the system bus and/or dedicated bus.

11. A method of transferring data between two locations of a computer system, the method comprising configuring the ports of a Direct Memory Access (DMA) controller having at least three input/output ports to couple a first of the ports to one of said locations, a second of the ports to the other of said locations, and to couple the first and second ports together.

12. A method of transferring data between first and second, and third and fourth locations of a computer system, the method comprising configuring the ports of a Direct Memory Access (DMA) controller having at least four input/output ports to:
couple a first of the ports to said first locations, a second of the ports to said second locations, and to couple the first and second ports together; and
couple a third of the ports to said third locations, a fourth of the ports to said fourth locations, and to couple the third and fourth ports together.
